# EUROPEAN PATENT SPECIFICATION

(11) **EP 2 557 128 B1**
(45) Date of publication and mention of the grant of the patent: **25.02.2015**
(21) Application number: 11006601.6
(22) Date of filing: 11.08.2011
(51) Int. Cl.: C09B 23/14, D21H 17/67, D21H 21/18, D21H 21/30

(54) **Improved aqueous compositions for whitening and shading in coating applications**
Verbesserte wässrige Zusammensetzungen zum Weißen und Abtönen in Beschichtungsanwendungen
Compositions aqueuses améliorées pour le blanchiment et l'ombrage dans des applications de revêtement

(43) Date of publication of application: 13.02.2013
(73) Proprietor: Clariant International Ltd., 4132 Muttenz (CH)
(72) Inventor: Klein, Cédric, 68420 Herrlisheim-près-Colmar (FR); Reveaud, Frederic, 68100 Mulhouse (FR); Atkinson, David, 4144 Arlesheim BL (CH); Jackson, Andrew Clive, 4142 Muenchenstein BL (CH)
(74) Representative: Ricker, Mathias

(56) References cited:
- EP-A1- 2 302 132
- WO-A1-2011/009632
- WO-A2-2006/061399
- DE-A1- 19 916 078
- GB-A- 2 068 428
- US-A- 6 030 443
- US-A1- 2006 079 438

## Description

The instant invention relates to aqueous coating compositions comprising derivatives of diaminostilbene optical brightener, shading dyes, white pigments, primary binders, and optionally secondary binders which can be used to provide coated substrates of high whiteness and brightness.

### Background of the Invention

It is well known that the whiteness and thereby the attractiveness of coated papers can be improved by the addition of optical brighteners and shading dyes to the coating composition. Documents US 2006/079438 A1 and WO 2011/009632 A1 disclose sizing compositions for paper comprising an acid dye and an optical brightener of bis(triazinylamino)stilbene type.

WO 0218705 A1 however teaches that the use of shading dyes, while having a positive effect on whiteness, has a negative impact on brightness. The solution to this problem is to add additional optical brightener, the advantage claimed in WO 0218705 A1 being characterized by the use of a mixture comprising at least one direct dye (exemplified by C.I. Direct Violet 35) and at least one optical brightener.

In order to satisfy the demand for coated papers of higher whiteness and brightness, there is a need for more efficient shading compositions.

Surprisingly, we have now discovered shading dyes which have a strongly positive effect on whiteness while having little or no effect on brightness, and which can be used in coating compositions comprising optical brighteners, white pigments, primary binders, and optionally secondary binders in order to enable the papermaker to reach high levels of whiteness and brightness.

Therefore, the goal of the present invention is to provide aqueous coated compositions containing derivatives of diaminostilbene optical brightener, certain shading dyes, white pigments, primary binders, and optionally secondary binders, which afford enhanced high whiteness levels while avoiding the disadvantages characterized by the use of shading dyes (loss of brightness) or pigments (lower whiteness build) recognized as being state-of-the-art.

### Description of the Invention

The present invention therefore provides aqueous coating compositions for optical brightening and shading of substrates, preferably paper, comprising
(a) at least one optical brightener of formula (I) 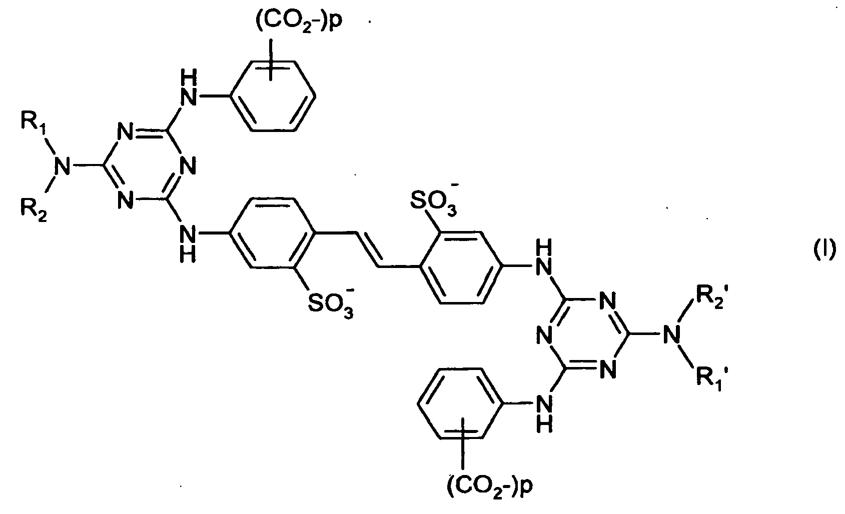 in which
   the anionic charge on the brightener is balanced by a cationic charge composed of one or more identical or different cations selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
   - R₁ and R₁': may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
   - R₂ and R₂': may be the same or different, and each is C₁-C₄ linear or branched alkyl, C₂-C₄ linear or branched hydroxyalkyl, CH₂CO₂⁻, CH(CO₂⁻)CH₂CO₂⁻, CH(CO₂⁻)CH₂CH₂CO₂⁻, CH₂CH₂SO₃⁻, CH₂CH₂CO₂⁻, CH₂CH(CH₃)CO₂⁻, benzyl, or
   - R₁ and R₂: and/or R₁' and R₂', together with the neighboring nitrogen atom signify a morpholine ring and
   - p: is 1 or 2,
(b) at least one shading dye of formula (II) 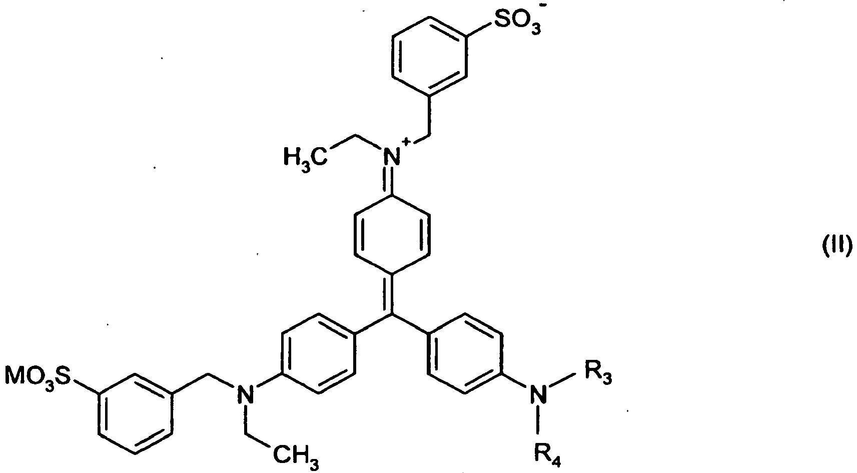 in which
   - R₃: signifies H, methyl or ethyl,
   - R₄: signifies paramethoxyphenyl, methyl or ethyl,
   - M: signifies a cation selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
(c) at least one white pigment,
(d) at least one primary binder,
(e) optionally one or more secondary binders and
(f) water.

In compounds of formula (I) for which p is 1, the CO₂⁻ group is preferably in the 2 or 4-position of the phenyl ring.

Preferred compounds of formula (I) are those in which
the anionic charge on the brightener is balanced by a cationic charge composed of one or more identical or different cations selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
- R₁ and R₁': may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
- R₂ and R₂': may be the same or different, and each is C₁-C₄ linear or branched alkyl, C₂-C₄ linear or branched hydroxyalkyl, CH₂CO₂⁻, CH(CO₂⁻)CH₂CO₂⁻ or CH₂CH₂SO₃⁻ and
- p: is 1 or 2.

More preferred compounds of formula (I) are those in which the anionic charge on the brightener is balanced by a cationic charge composed of one or more identical or different cations selected from the group consisting of Li⁺, Na⁺, K⁺, Ca²⁺, Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
- R₁ and R₁': may be the same or different, and each is hydrogen, methyl, ethyl, propyl, α-methylpropyl, β-methylpropyl, β-hydroxyethyl, β-hydroxypropyl, CH₂CO₂⁻, CH₂CH₂CONH₂ or CH₂CH₂CN,
- R₂ and R₂': may be the same or different, and each is methyl, ethyl, propyl, α-methylpropyl, β-methylpropyl, β-hydroxyethyl, β-hydroxypropyl, CH₂CO₂⁻, CH(CO₂⁻)CH₂CO₂⁻ or CH₂CH₂SO₃⁻ and
- p: is 1 or 2.

Especially preferred compounds of formula (I) are those in which
the anionic charge on the brightener is balanced by a cationic charge composed of one or more identical or different cations selected from the group consisting of Na⁺, K⁺, triethanolammonium, N-hydroxyethyl-N,N-dimethylammonium, N-hydroxyethyl-N,N-diethylammonium or mixtures of said compounds,
- R₁ and R₁': may be the same or different, and each is hydrogen, methyl, ethyl, propyl, β-hydroxyethyl, β-hydroxypropyl, CH₂CO₂⁻, CH₂CH₂CONH₂ or CH₂CH₂CN,
- R₂ and R₂': may be the same or different, and each is ethyl, propyl, β-hydroxyethyl, β-hydroxypropyl, CH₂CO₂⁻, CH(CO₂⁻)CH₂CO₂⁻ or CH₂CH₂SO₃⁻ and
- p: is 1.

Compound of formula (I) is used in an amount typically of from 0.01 to 5 % by weight, preferably in the range of from 0.05 to 3 % by weight, the % by weight being based on the total weight of dry white pigment.

Preferred compounds of formula (II) are those in which
- R₃: signifies H, methyl or ethyl,
- R₄: signifies paramethoxyphenyl, methyl or ethyl,
- M: signifies a cation selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

More preferred compounds of formula (II) are those in which
- R₃: signifies methyl or ethyl,
- R₄: signifies methyl or ethyl,
- M: signifies a cation selected from the group consisting of Li⁺, Na⁺, K⁺, ½ Ca²⁺, ½ Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

Especially preferred compounds of formula (II) are those in which
- R₃: signifies methyl or ethyl,
- R₄: signifies methyl or ethyl,
- M: signifies a cation selected from the group consisting of Na⁺, K⁺, triethanolammonium, N-hydroxyethyl-N,N-dimethylammonium, N-hydroxyethyl-N,N-diethylammonium or mixtures of said compounds.

Compound of formula (II) is used in an amount typically of from 0.00001 to 0.05 % by weight, preferably in the range of form 0.00005 to 0.02 % by weight, the % by weight being based on the total weight of dry white pigment.

Although it is possible to produce coating compositions that are free from white pigments, the best white substrates for printing are made using opaque coating compositions comprise from 10 to 70 % by weight of white pigments, preferably of from 40 to 60 % by weight of white pigments, the % by weight being based on the total weight of the coating composition. Such white pigments are generally inorganic pigments, e.g., aluminium silicates (kaolin, otherwise known as china clay), calcium carbonate (chalk), titanium dioxide, aluminium hydroxide, barium carbonate, barium sulphate, or calcium sulphate (gypsum). Preferably a mixture of from 10 to 20 % by weight of clay and of from 30 to 40 % by weight of chalk is used as white pigments, the % by weight being based on the total weight of the coating composition.

The binders may be any of those commonly used in the paper industry for the production of coating compositions and may consist of a single binder or of a mixture of primary and secondary binders.

The sole or primary binder is preferably a synthetic latex, typically a styrenebutadiene, vinyl acetate, styrene acrylic, vinyl acrylic or ethylene vinyl acetate polymer. The preferred primary binder is a latex binder.

The sole or primary binder is used in an amount typically in the range of form 2 to 25 % by weight, preferably of from 4 to 20 % by weight, the % by weight being based on the total weight of white pigment.

The secondary binder which may be optionally used may be, e.g., starch, carboxymethylcellulose, casein, soy polymers, polyvinyl alcohol or a mixture of any of the above. The preferred secondary binder which may be optionally used is a polyvinyl alcohol binder.

The polyvinyl alcohol which may be optionally used in the coating composition as secondary binder has preferably a degree of hydrolysis greater than or equal to 60 % and a Brookfield viscosity of from 2 to 80 mPa.s (4 % aqueous solution at 20 °C). More preferably, the polyvinyl alcohol has a degree of hydrolysis greater than or equal to 80 % and a Brookfield viscosity of from 2 to 40 mPa.s (4 % aqueous solution at 20 °C).

When optionally used, the secondary binder is used in an amount typically in the range of form 0.1 to 20 % by weight, preferably of from 0.2 to 8 % by weight, more preferably of from 0.3 to 6 % by weight, the % by weight being based on the total weight of white pigment.

The pH value of the coating composition is typically in the range of from 5 to 13, preferably of from 6 to 11, more preferably of from 7 to 10. Where it is necessary to adjust the pH of the coating composition, acids or bases may be employed. Examples of acids which may be employed include but are not restricted to hydrochloric acid, sulphuric acid, formic acid and acetic acid. Examples of bases which may be employed include but are not restricted to alkali metal and alkaline earth metal hydroxide or carbonates, ammonia or amines.

In addition to one or more compounds of formula (I), one or more compounds of formula (II), one or more white pigments, one or more binders, optionally one or more secondary binders and water, the coating composition may contain by-products formed during the preparation of compounds of formula (I) and compounds of formula (II) as well as other conventional paper additives. Examples of such additives are for example antifreezers, dispersing agents, synthetic or natural thickeners, carriers (e.g. polyethylene glycols), defoamers, wax emulsions, dyes, inorganic salts, solubilizing aids, preservatives, complexing agents, biocides, cross-linkers, pigments, special resins etc.

The coating composition may be prepared by adding one or more compounds of formula (I) and one or more compounds of formula (II), to a preformed aqueous dispersion of one or more binders, optionally one or more secondary binders and one or more white pigments.

One or more compounds of formula (I) and one or more compounds of formula (II) can be added in any order or at the same time to the preformed aqueous dispersion of one or more binders, optionally one or more secondary binders and one or more white pigments.

One or more compounds of formula (I), one or more compounds of formula (II) and optionally one or more secondary binders can be added as solids or as preformed aqueous solutions to the preformed aqueous dispersion of one or more white pigments.

The present invention further provides a process for the optical brightening and tinting of paper substrates characterized in that an aqueous coating composition containing at least one optical brightener, at least one certain shading dye, at least one white pigment, at least one binder and optionally at least one secondary binder is used.

When used as a preformed aqueous solution, the concentration of compound of formula (I) in water is preferably of from 1 to 80 % by weight, more preferably of from 2 to 50 % by weight, even more preferably from 10 to 30 % by weight, the % by weight being based on the total weight of the preformed aqueous solution containing the compound of formula (I).

When used as a preformed aqueous solution, the concentration of compound of formula (II) in water is preferably of from 0.001 to 30 % by weight, more preferably of from 0.01 to 25 % by weight, even more preferably from 0.02 to 20 % by weight, the % by weight being based on the total weight of the preformed aqueous solution containing the compound of formula (II).

When used as a preformed aqueous solution, the concentration of secondary binders in water is preferably of from 1 to 50 % by weight, more preferably of from 2 to 40 % by weight, even more preferably from 5 to 30 % by weight, the % by weight being based on the total weight of the preformed aqueous solution containing the secondary binders.

The following examples shall demonstrate the instant invention in more details. In the present application, if not indicated otherwise, "parts" means "parts by weight" and "%" means "% by weight".

### Examples

### Preparative Example 1

An aqueous solution (S1) is prepared by slowly adding 157 parts of water to 843 parts of a preformed aqueous mixture containing 0.210 mol per kg of compound of formula (1) (synthesized according to example 1 in WO 2011/033064-A2 with the sole difference that the final solution was ultra-filtered to remove salts and concentrated to 0.210 mol per kg of compound of formula (1)) at room temperature with efficient stirring. The obtained mixture is stirred for 1 hour at room temperature to afford 1000 parts of an aqueous solution (S1) containing 0.177 mol per kg of compound of formula (1). The resulting aqueous solution (S1) has a pH in the range of from 8.0 to 9.0.

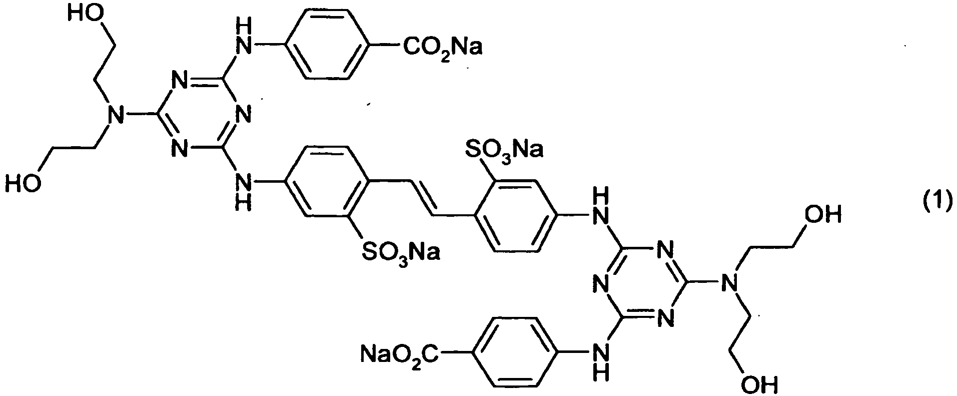

### Preparative Example 1a

An aqueous solution (S1a) is prepared by slowly adding 2 parts of compound of formula (a) and 155 parts of water to 843 parts of a preformed aqueous mixture containing 0.210 mol per kg of compound of formula (1) (synthesized according to example 1 in WO 2011/033064-A2 with the sole difference that the final solution was ultra-filtered to remove salts and concentrated to 0.210 mol per kg of compound of formula (1)) at room temperature with efficient stirring. The obtained mixture is stirred for 1 hour at room temperature to afford 1000 parts of an aqueous formulation (S1a) containing compound of formula (a) at a concentration of 0.2 weight %, the weight % being based on the total weight of the final aqueous formulation (S1a) and 0.177 mol per kg of compound of formula (1). The resulting aqueous formulation (S1a) has a pH in the range of from 8.0 to 9.0.

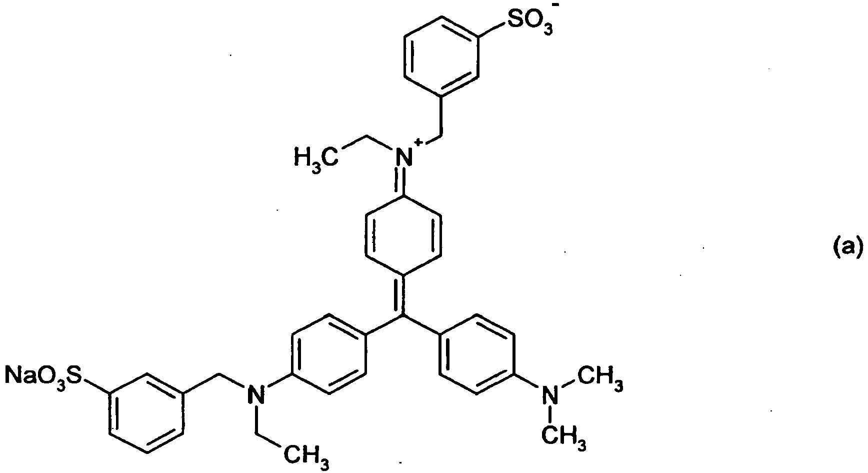

### Preparative Example 1b

An aqueous solution (S1b) is prepared by slowly adding 2 parts of compound of formula (b) and 155 parts of water to 843 parts of a preformed aqueous mixture containing 0.210 mol per kg of compound of formula (1) (synthesized according to example 1 in WO 2011/033064-A2 with the sole difference that the final solution was ultra-filtered to remove salts and concentrated to 0.210 mol per kg of compound of formula (1)) at room temperature with efficient stirring. The obtained mixture is stirred for 1 hour at room temperature to afford 1000 parts of an aqueous solution (S1 b) containing compound of formula (b) at a concentration of 0.2 weight %, the weight % being based on the total weight of the final aqueous solution (S1b) and 0.177 mol per kg of compound of formula (1). The resulting aqueous solution (S1b) has a pH in the range of from 8.0 to 9.0.

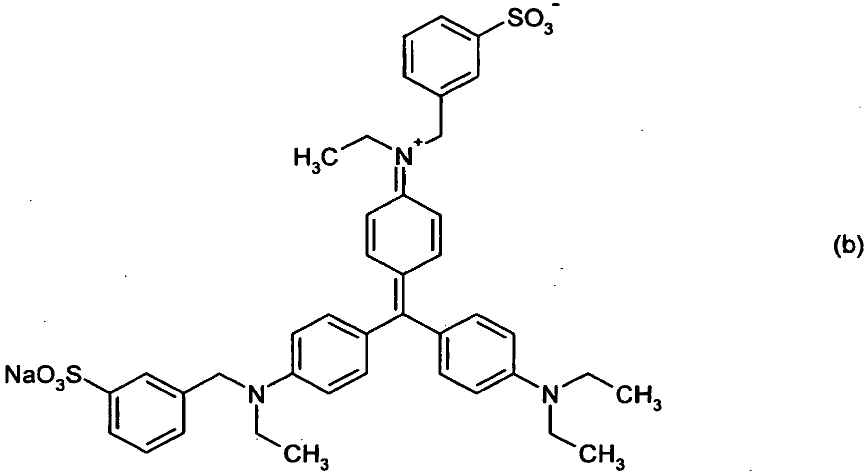

### Comparative Example 1 c

An aqueous solution (S1c) is prepared by slowly adding 18.2 parts of a preformed aqueous solution containing 11 weight % of C.I. Direct Violet 35, the weight % being based on the total weight of the aqueous C.I. Direct Violet 35 preformed solution and 138.8 parts of water to 843 parts of a preformed aqueous mixture containing 0.210 mol per kg of compound of formula (1) (synthesized according to example 1 in WO 2011/033064-A2 with the sole difference that the final solution was ultra-filtered to remove salts and concentrated to 0.210 mol per kg of compound of formula (1)) at room temperature with efficient stirring. The obtained mixture is stirred for 1 hour at room temperature to afford 1000 parts of an aqueous solution (S1c) containing C.I. Direct Violet 35 at a concentration of 0.2 weight %, the weight % being based on the total weight of the final aqueous solution (S1c) and 0.177 mol per kg of compound of formula (1). The resulting aqueous solution (S1c) has a pH in the range of from 8.0 to 9.0.

### Application Example 1

A coating composition is prepared containing 70 parts chalk (commercially available under the trade name Hydrocarb 90 from OMYA), 30 parts clay (commercially available under the trade name Kaolin SPS from IMERYS), 42.8 parts water, 0.6 parts dispersing agent (a sodium salt of a polyacrylic acid commercially available under the trade name Polysalz S from BASF), 20 parts of 50 % latex (a styrene butadiene copolymer commercially available under the trade name DL 921 from Dow) and 0.8 parts of a polyvinyl alcohol having a degree of hydrolysis of 98 - 99 % and Brookfield viscosity of 4.0 - 5.0 mPa.s (4 % aqueous solution at 20 °C). The solids content of the coating composition is adjusted to approx. 65 % by the addition of water, and the pH is adjusted to 8 - 9 with sodium hydroxide.

Aqueous solutions (S1), (S1a), (S1b) and (S1c) prepared according to preparative example 1, 1 a and 1 b and comparative example 1 c respectively are added to the stirred coating composition at a range of concentrations of from 0 to 2 weight % (from 0 to 0.4 % by weight of compound of formula (1) based on dry solid), the % by weight being based on the total weight of the dry pigment.

The coating composition is then applied to a commercial 75 gsm neutral-sized white paper base sheet using an automatic wire-wound bar applicator with a standard speed setting and a standard load on the bar. The coated paper is then dried for 5 minutes in a hot air flow. Afterwards the paper is allowed to condition and measured then for CIE Whiteness and brightness on a calibrated Elrepho spectrophotometer. Results are depicted in table 1 a and 1b respectively and clearly shows the significant improvement in whiteness while avoiding the disadvantages characterized by the use of shading dyes (loss of brightness).

**Table 1a**

| Conc. % | CIE Whiteness | | |
|---|---|---|---|
| | Solution (S1) from preparative example 1 | Solution (S1a) from preparative example 1 a | Solution (S1b) from preparative example 1b |
| 0.0 | 84.2 | 84.2 | 84.2 |
| 0.3 | 98.8 | 100.6 | 100.6 |
| 0.6 | 106.4 | 108.9 | 108.8 |
| 0.9 | 108.9 | 112.5 | 111.6 |
| 1.2 | 109.1 | 114.0 | 114.0 |
| 1.5 | 109.4 | 115.7 | 115.6 |

**Table 1b**

| Conc. % | Brightness | | | |
|---|---|---|---|---|
| | Solution (S1) from preparative example 1 | Solution (S1a) from preparative example 1a | Solution (S1b) from preparative example 1b | Solution (S1c) from comparative example 1c |
| 0.0 | 88.8 | 88.8 | 88.8 | 88.8 |
| 0.3 | 93.6 | 93.4 | 93.6 | 92.7 |
| 0.6 | 96.3 | 96.0 | 95.9 | 94.0 |
| 0.9 | 98.0 | 97.1 | 97.0 | 93.2 |
| 1.2 | 97.8 | 96.9 | 97.0 | 92.5 |
| 1.5 | 98.2 | 97.1 | 97.1 | 92.1 |

### Preparative Example 2

An aqueous solution (S2) is prepared by slowly adding 157 parts of water to 843 parts of a preformed aqueous mixture containing 0.210 mol per kg of compound of formula (2) (synthesized according to example 1 in WO 2011/033064-A2 with the sole differences that iminodiacetic acid is used instead of diethanolamine and the final solution is concentrated to 0.210 mol per kg of compound of formula (2)) at room temperature with efficient stirring. The obtained mixture is stirred for 1 hour at room temperature to afford 1000 parts of an aqueous solution (S2) containing 0.177 mol per kg of compound of formula (2). The resulting aqueous solution (S2) has a pH in the range of from 8.0 to 9.0.

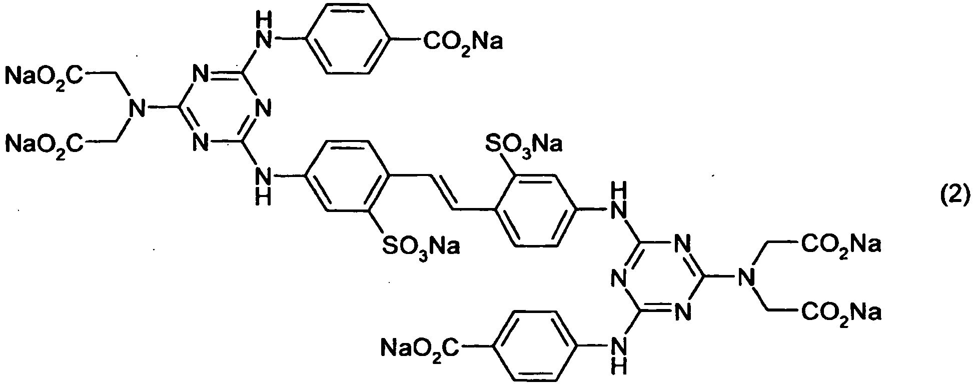

### Preparative Example 2a

An aqueous solution (S2a) is prepared by slowly adding 2 parts of compound of formula (a) and 155 parts of water to 843 parts of a preformed aqueous mixture containing 0.210 mol per kg of compound of formula (2) (synthesized according to example 1 in WO 2011/033064-A2 with the sole differences that iminodiacetic acid is used instead of diethanolamine and the final solution is concentrated to 0.210 mol per kg of compound of formula (2)) at room temperature with efficient stirring. The obtained mixture is stirred for 1 hour at room temperature to afford 1000 parts of an aqueous solution (S2a) containing compound of formula (a) at a concentration of 0.2 weight %, the weight % being based on the total weight of the final aqueous solution (S2a) and 0.177 mol per kg of compound of formula (2). The resulting aqueous solution (S2a) has a pH in the range of from 8.0 to 9.0.

### Preparative Example 2b

An aqueous solution (S2b) is prepared by slowly adding 2 parts of compound of formula (b) and 155 parts of water to 843 parts of a preformed aqueous mixture containing 0.210 mol per kg of compound of formula (2) (synthesized according to example 1 in WO 2011/033064-A2 with the sole differences that iminodiacetic acid is used instead of diethanolamine and the final solution is concentrated to 0.210 mol per kg of compound of formula (2)) at room temperature with efficient stirring. The obtained mixture is stirred for 1 hour at room temperature to afford 1000 parts of an aqueous solution (S2b) containing compound of formula (b) at a concentration of 0.2 weight %, the weight % being based on the total weight of the final aqueous solution (S2b) and 0.177 mol per kg of compound of formula (2). The resulting aqueous solution (S2b) has a pH in the range of from 8.0 to 9.0.

### Comparative Example 2c

An aqueous solution (S2c) is prepared by slowly adding 18.2 parts of a preformed aqueous solution containing 11 weight % of C.I. Direct Violet 35, the weight % being based on the total weight of the aqueous C.I. Direct Violet 35 preformed solution and 138.8 parts of water to 843 parts of a preformed aqueous mixture containing 0.210 mol per kg of compound of formula (2) (synthesized according to example 1 in WO 2011/033064-A2 with the sole differences that iminodiacetic acid is used instead of diethanolamine and the final solution is concentrated to 0.210 mol per kg of compound of formula (2)) at room temperature with efficient stirring. The obtained mixture is stirred for 1 hour at room temperature to afford 1000 parts of an aqueous solution (S2c) containing C.I. Direct Violet 35 at a concentration of 0.2 weight %, the weight % being based on the total weight of the final aqueous solution (S2c) and 0.177 mol per kg of compound of formula (2). The resulting aqueous solution (S2c) has a pH in the range of from 8.0 to 9.0.

### Application Example 2

A coating composition is prepared containing 70 parts chalk (commercially available under the trade name Hydrocarb 90 from OMYA), 30 parts clay (commercially available under the trade name Kaolin SPS from IMERYS), 42.8 parts water, 0.6 parts dispersing agent (a sodium salt of a polyacrylic acid commercially available under the trade name Polysalz S from BASF), 20 parts of 50 % latex (a styrene butadiene copolymer commercially available under the trade name DL 921 from Dow) and 0.8 parts of a polyvinyl alcohol having a degree of hydrolysis of 98 - 99 % and Brookfield viscosity of 4.0 - 5.0 mPa.s (4 % aqueous solution at 20 °C). The solids content of the coating composition is adjusted to approx. 65 % by the addition of water, and the pH is adjusted to 8 - 9 with sodium hydroxide.

Aqueous solutions (S2), (S2a), (S2b) and (S2c) prepared according to preparative example 2, 2a and 2b and comparative example 2c respectively are added to the stirred coating composition at a range of concentrations of from 0 to 2 weight % (from 0 to 0.4 % by weight of compound of formula (2) based on dry solid), the % by weight being based on the total weight of the dry pigment.

The coating composition is then applied to a commercial 75 gsm neutral-sized white paper base sheet using an automatic wire-wound bar applicator with a standard speed setting and a standard load on the bar. The coated paper is then dried for 5 minutes in a hot air flow. Afterwards the paper is allowed to condition and measured then for CIE Whiteness and brightness on a calibrated Elrepho spectrophotometer. Results are depicted in table 2a and 2b respectively and clearly shows the significant improvement in whiteness while avoiding the disadvantages characterized by the use of shading dyes (loss of brightness).

**Table 2a**

| Conc. % | CIE Whiteness | | |
|---|---|---|---|
| | Solution (S2) from preparative example 2 | Solution (S2a) from preparative example 2a | Solution (S2b) from preparative example 2b |
| 0.0 | 84.2 | 84.2 | 84.2 |
| 0.3 | 99.5 | 100.6 | 100.8 |
| 0.6 | 106.4 | 110.2 | 109.3 |
| 0.9 | 110.5 | 114.3 | 114.4 |
| 1.2 | 111.0 | 116.4 | 116.3 |
| 1.5 | 111.1 | 117.6 | 117.8 |

**Table 2b**

| Conc. % | Brightness | | | |
|---|---|---|---|---|
| | Solution (S2) from preparative example 2 | Solution (S2a) from preparative example 2a | Solution (S2b) from preparative example 2b | Solution (S2c) from comparative example 2c |
| 0.0 | 88.8 | 88.8 | 88.8 | 88.8 |
| 0.3 | 93.9 | 93.6 | 93.7 | 93.0 |
| 0.6 | 96.5 | 96.4 | 96.2 | 94.6 |
| 0.9 | 98.1 | 97.6 | 97.6 | 95.4 |
| 1.2 | 98.7 | 98.0 | 97.9 | 95.0 |
| 1.5 | 98.9 | 97.6 | 97.5 | 94.6 |

### Preparative Example 3

An aqueous solution (S3) is prepared by slowly adding 222.2 parts of water to 777.8 parts of a preformed aqueous mixture containing 0.157 mol per kg of compound of formula (3) (synthesized according to example 1 in WO 2011/033064-A2 with the sole differences that aspartic acid is used instead of diethanolamine and the final solution is concentrated to 0.157 mol per kg of compound of formula (3)) at room temperature with efficient stirring. The obtained mixture is stirred for 1 hour at room temperature to afford 1000 parts of an aqueous solution (S3) containing 0.122 mol per kg of compound of formula (3). The resulting aqueous solution (S3) has a pH in the range of from 8.0 to 9.0.

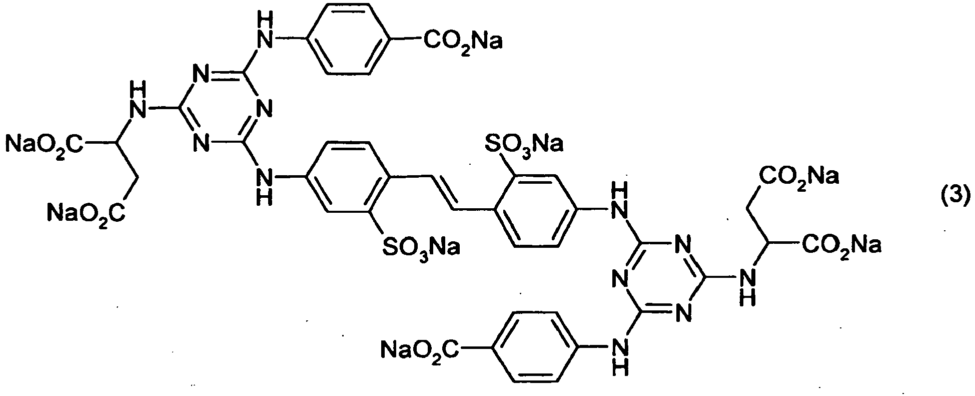

### Preparative Example 3a

An aqueous solution (S3a) is prepared by slowly adding 2 parts of compound of formula (a) and 220.2 parts of water to 777.8 parts of a preformed aqueous mixture containing 0.157 mol per kg of compound of formula (3) (synthesized according to example 1 in WO 2011/033064-A2 with the sole differences that aspartic acid is used instead of diethanolamine and the final solution is concentrated to 0.157 mol per kg of compound of formula (3)) at room temperature with efficient stirring. The obtained mixture is stirred for 1 hour at room temperature to afford 1000 parts of an aqueous solution (S3a) containing compound of formula (a) at a concentration of 0.2 weight %, the weight % being based on the total weight of the final aqueous solution (S3a) and 0.122 mol per kg of compound of formula (3). The resulting aqueous solution (S3a) has a pH in the range of from 8.0 to 9.0.

### Preparative Example 3b

An aqueous solution (S3b) is prepared by slowly adding 2 parts of compound of formula (b) and 220.2 parts of water to 777.8 parts of a preformed aqueous mixture containing 0.157 mol per kg of compound of formula (3) (synthesized according to example 1 in WO 2011/033064-A2 with the sole differences that aspartic acid is used instead of diethanolamine and the final solution is concentrated to 0.157 mol per kg of compound of formula (3)) at room temperature with efficient stirring. The obtained mixture is stirred for 1 hour at room temperature to afford 1000 parts of an aqueous solution (S3b) containing compound of formula (b) at a concentration of 0.2 weight %, the weight % being based on the total weight of the final aqueous solution (S3b) and 0.122 mol per kg of compound of formula (3). The resulting aqueous solution (S3b) has a pH in the range of from 8.0 to 9.0.

### Comparative Example 3c

An aqueous solution (S3c) is prepared by slowly adding 18.2 parts of a preformed aqueous solution containing 11 weight % of C.I. Direct Violet 35, the weight % being based on the total weight of the aqueous C.I. Direct Violet 35 preformed solution and 204.0 parts of water to 777.8 parts of a preformed aqueous mixture containing 0.157 mol per kg of compound of formula (3) (synthesized according to example 1 in WO 2011/033064-A2 with the sole differences that aspartic acid is used instead of diethanolamine and the final solution is concentrated to 0.157 mol per kg of compound of formula (3)) at room temperature with efficient stirring. The obtained mixture is stirred for 1 hour at room temperature to afford 1000 parts of an aqueous solution (S3c) containing C.I. Direct Violet 35 at a concentration of 0.2 weight %, the weight % being based on the total weight of the final aqueous solution (S3c) and 0.122 mol per kg of compound of formula (3). The resulting aqueous solution (S3c) has a pH in the range of from 8.0 to 9.0.

### Application Example 3

A coating composition is prepared containing 70 parts chalk (commercially available under the trade name Hydrocarb 90 from OMYA), 30 parts clay (commercially available under the trade name Kaolin SPS from IMERYS), 42.8 parts water, 0.6 parts dispersing agent (a sodium salt of a polyacrylic acid commercially available under the trade name Polysalz S from BASF), 20 parts of 50 % latex (a styrene butadiene copolymer commercially available under the trade name DL 921 from Dow) and 0.8 parts of a polyvinyl alcohol having a degree of hydrolysis of 98 - 99 % and Brookfield viscosity of 4.0 - 5.0 mPa.s (4 % aqueous solution at 20 °C). The solids content of the coating composition is adjusted to approx. 65 % by the addition of water, and the pH is adjusted to 8 - 9 with sodium hydroxide. Aqueous solutions (S3), (S3a), (S3b) and (S3c) prepared according to preparative example 3, 3a and 3b and comparative example 3c respectively are added to the stirred coating composition at a range of concentrations of from 0 to 2 weight % (from 0 to 0.4 % by weight of compound of formula (3) based on dry solid), the % by weight being based on the total weight of the dry pigment.

The coating composition is then applied to a commercial 75 gsm neutral-sized white paper base sheet using an automatic wire-wound bar applicator with a standard speed setting and a standard load on the bar. The coated paper is then dried for 5 minutes in a hot air flow. Afterwards the paper is allowed to condition and measured then for CIE Whiteness and brightness on a calibrated Elrepho spectrophotometer. Results are depicted in table 3a and 3b respectively and clearly shows the significant improvement in whiteness while avoiding the disadvantages characterized by the use of shading dyes (loss of brightness).

**Table 3a**

| Conc. % | CIE Whiteness | | |
|---|---|---|---|
| | Solution (S3) from preparative example 3 | Solution (S3a) from preparative example 3a | Solution (S3b) from preparative example 3b |
| 0.0 | 84.3 | 84.3 | 84.3 |
| 0.3 | 95.9 | 96.4 | 96.9 |
| 0.6 | 102.3 | 103.4 | 105.3 |
| 0.9 | 106.5 | 107.8 | 110.2 |
| 1.2 | 109.5 | 111.4 | 114.7 |
| 1.5 | 110.7 | 113.1 | 117.4 |

**Table 3b**

| Conc. % | Brightness | | | |
|---|---|---|---|---|
| | Solution (S3) from preparative example 3 | Solution (S3a) from preparative example 3a | Solution (S3b) from preparative example 3b | Solution (S3c) from comparative example 3c |
| 0.0 | 89.2 | 89.2 | 89.2 | 89.2 |
| 0.3 | 92.8 | 92.5 | 92.5 | 92.1 |
| 0.6 | 95.0 | 94.6 | 94.7 | 93.7 |
| 0.9 | 96.5 | 95.9 | 96.1 | 94.2 |
| 1.2 | 97.7 | 96.8 | 96.9 | 94.3 |
| 1.5 | 98.3 | 97.2 | 97.4 | 94.5 |

### Preparative Example 4

An aqueous solution (S4) is prepared by slowly adding 222.2 parts of water to 777.8 parts of a preformed aqueous mixture containing 0.157 mol per kg of compound of formula (4) (synthesized according to example 1 in WO 2011/033064-A2 with the sole differences that diisopropanolamine is used instead of diethanolamine and the final solution is concentrated to 0.157 mol per kg of compound of formula (4)) at room temperature with efficient stirring. The obtained mixture is stirred for 1 hour at room temperature to afford 1000 parts of an aqueous solution (S4) containing 0.122 mol per kg of compound of formula (4). The resulting aqueous solution (S4) has a pH in the range of from 8.0 to 9.0.

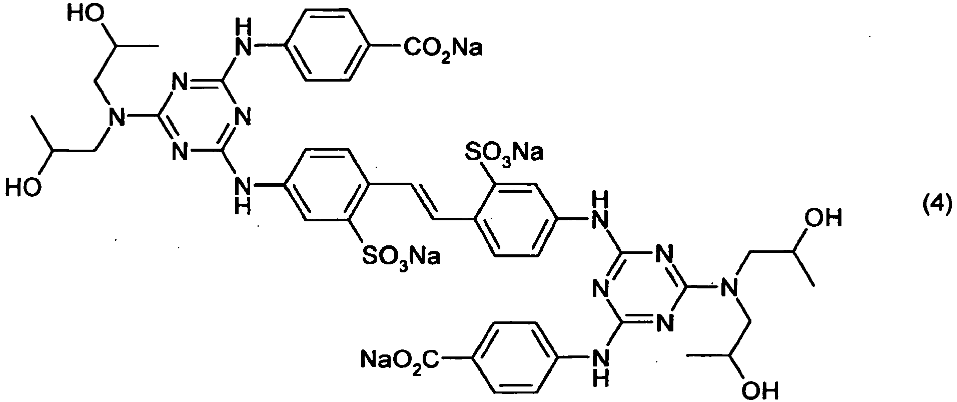

### Preparative Example 4a

An aqueous solution (S4a) is prepared by slowly adding 2 parts of compound of formula (a) and 220.2 parts of water to 777.8 parts of a preformed aqueous mixture containing 0.157 mol per kg of compound of formula (4) (synthesized according to example 1 in WO 2011/033064-A2 with the sole differences that diisopropanolamine is used instead of diethanolamine and the final solution is concentrated to 0.157 mol per kg of compound of formula (4)) at room temperature with efficient stirring. The obtained mixture is stirred for 1 hour at room temperature to afford 1000 parts of an aqueous solution (S4a) containing compound of formula (a) at a concentration of 0.2 weight %, the weight % being based on the total weight of the final aqueous solution (S4a) and 0.122 mol per kg of compound of formula (4). The resulting aqueous solution (S4a) has a pH in the range of from 8.0 to 9.0.

### Preparative Example 4b

An aqueous solution (S4b) is prepared by slowly adding 2 parts of compound of formula (b) and 220.2 parts of water to 777.8 parts of a preformed aqueous mixture containing 0.157 mol per kg of compound of formula (4) (synthesized according to example 1 in WO 2011/033064-A2 with the sole differences that diisopropanolamine is used instead of diethanolamine and the final solution is concentrated to 0.157 mol per kg of compound of formula (4)) at room temperature with efficient stirring. The obtained mixture is stirred for 1 hour at room temperature to afford 1000 parts of an aqueous solution (S4b) containing compound of formula (b) at a concentration of 0.2 weight %, the weight % being based on the total weight of the final aqueous solution (S4b) and 0.122 mol per kg of compound of formula (4). The resulting aqueous solution (S4b) has a pH in the range of from 8.0 to 9.0.

### Comparative Example 4c

An aqueous solution (S4c) is prepared by slowly adding 18.2 parts of a preformed aqueous solution containing 11 weight % of C.I. Direct Violet 35, the weight % being based on the total weight of the aqueous C.I. Direct Violet 35 preformed solution and 204.0 parts of water to 777.8 parts of a preformed aqueous mixture containing 0.157 mol per kg of compound of formula (4) (synthesized according to example 1 in WO 2011/033064-A2 with the sole differences that diisopropanolamine is used instead of diethanolamine and the final solution is concentrated to 0.157 mol per kg of compound of formula (4)) at room temperature with efficient stirring. The obtained mixture is stirred for 1 hour at room temperature to afford 1000 parts of an aqueous solution (S4c) containing C.I. Direct Violet 35 at a concentration of 0.2 weight %, the weight % being based on the total weight of the final aqueous solution (S4c) and 0.122 mol per kg of compound of formula (4). The resulting aqueous solution (S4c) has a pH in the range of from 8.0 to 9.0.

### Application Example 4

A coating composition is prepared containing 70 parts chalk (commercially available under the trade name Hydrocarb 90 from OMYA), 30 parts clay (commercially available under the trade name Kaolin SPS from IMERYS), 42.8 parts water, 0.6 parts dispersing agent (a sodium salt of a polyacrylic acid commercially available under the trade name Polysalz S from BASF), 20 parts of 50 % latex (a styrene butadiene copolymer commercially available under the trade name DL 921 from Dow) and 0.8 parts of a polyvinyl alcohol having a degree of hydrolysis of 98 - 99 % and Brookfield viscosity of 4.0 - 5.0 mPa.s (4 % aqueous solution at 20 °C). The solids content of the coating composition is adjusted to approx. 65 % by the addition of water, and the pH is adjusted to 8 - 9 with sodium hydroxide. Aqueous solutions (S4), (S4a), (S4b) and (S4c) prepared according to preparative example 4, 4a and 4b and comparative example 4c respectively are added to the stirred coating composition at a range of concentrations of from 0 to 2 weight % (from 0 to 0.4 % by weight of compound of formula (4) based on dry solid), the % by weight being based on the total weight of the dry pigment.

The coating composition is then applied to a commercial 75 gsm neutral-sized white paper base sheet using an automatic wire-wound bar applicator with a standard speed setting and a standard load on the bar. The coated paper is then dried for 5 minutes in a hot air flow. Afterwards the paper is allowed to condition and measured then for CIE Whiteness and brightness on a calibrated Elrepho spectrophotometer. Results are depicted in table 4a and 4b respectively and clearly shows the significant improvement in whiteness while avoiding the disadvantages characterized by the use of shading dyes (loss of brightness).

**Table 4a**

| Conc. % | CIE Whiteness | | |
|---|---|---|---|
| | Solution (S4) from preparative example 4 | Solution (S4a) from preparative example 4a | Solution (S4b) from preparative example 4b |
| 0.0 | 84.3 | 84.3 | 84.3 |
| 0.3 | 96.7 | 98.2 | 98.0 |
| 0.6 | 103.1 | 105.5 | 105.9 |
| 0.9 | 107.6 | 110.5 | 110.2 |
| 1.2 | 110.0 | 115.1 | 115.1 |
| 1.5 | 111.1 | 118.6 | 117.1 |

**Table 4b**

| Conc. % | Brightness | | | |
|---|---|---|---|---|
| | Solution (S4) from preparative example 4 | Solution (S4a) from preparative example 4a | Solution (S4b) from preparative example 4b | Solution (S4c) from comparative example 4c |
| 0.0 | 89.2 | 89.2 | 89.2 | 89.2 |
| 0.3 | 93.0 | 92.9 | 92.8 | 92.2 |
| 0.6 | 95.2 | 94.9 | 94.9 | 93.3 |
| 0.9 | 96.8 | 96.0 | 96.0 | 93.1 |
| 1.2 | 97.7 | 97.0 | 97.1 | 93.1 |
| 1.5 | 98.3 | 97.3 | 97.3 | 92.5 |

## Claims

1. Aqueous coating compositions for optical brightening and shading of substrates, comprising
(a) at least one optical brightener of formula (I) 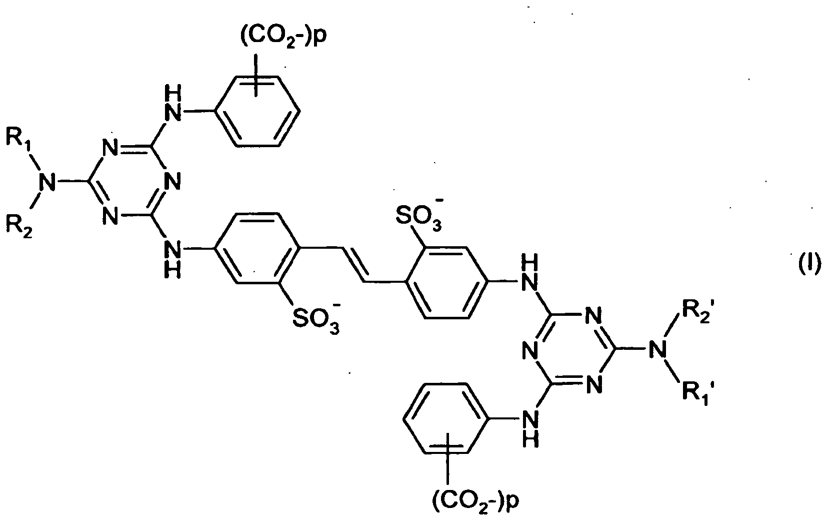 in which
the anionic charge on the brightener is balanced by a cationic charge composed of one or more identical or different cations selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
R₁ and R₁' may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
R₂ and R₂' may be the same or different, and each is C₁-C₄ linear or branched alkyl, C₂-C₄ linear or branched hydroxyalkyl, CH₂CO₂⁻, CH(CO₂⁻)CH₂CO₂⁻, CH(CO₂⁻)CH₂CH₂CO₂⁻, CH₂CH₂SO₃⁻, CH₂CH₂CO₂⁻, CH₂CH(CH₃)CO₂⁻, benzyl, or
R₁ and R₂ and/or R₁' and R₂', together with the neighboring nitrogen atom signify a morpholine ring and
p is 1 or 2,
(b) at least one shading dye of formula (II) 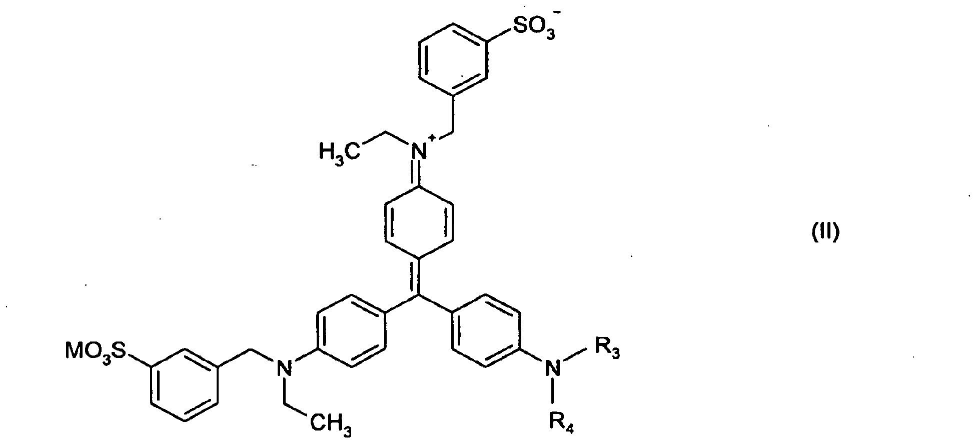 in which
R₃ signifies H, methyl or ethyl,
R₄ signifies paramethoxyphenyl, methyl or ethyl,
M signifies a cation selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
(c) at least one white pigment,
(d) at least one primary binder,
(e) optionally one or more secondary binders and
and
(f) water.

2. Aqueous coating compositions according to claim 1, wherein in compounds of formula (I) for which p is 1, the CO₂⁻ group is in the 2 or 4-position of the phenyl ring.

3. Aqueous coating compositions according to claim 1, wherein in compounds of formula (I) the anionic charge on the brightener is balanced by a cationic charge composed of one or more identical or different cations selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
R₁ and R₁' may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
R₂ and R₂' may be the same or different, and each is C₁-C₄ linear or branched alkyl, C₂-C₄ linear or branched hydroxyalkyl, CH₂CO₂⁻, CH(CO₂⁻)CH₂CO₂⁻ or CH₂CH₂SO₃⁻ and
p is 1 or 2.

4. Aqueous coating compositions according to claim 1, wherein in compounds of formula (I) the anionic charge on the brightener is balanced by a cationic charge composed of one or more identical or different cations selected from the group consisting of Li⁺, Na⁺, K⁺, Ca²⁺, Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
R₁ and R₁' may be the same or different, and each is hydrogen, methyl, ethyl, propyl, α-methylpropyl, β-methylpropyl, β-hydroxyethyl, β-hydroxypropyl, CH₂CO₂⁻, CH₂CH₂CONH₂ or CH₂CH₂CN,
R₂ and R₂^{'} may be the same or different, and each is methyl, ethyl, propyl, α-methylpropyl, β-methylpropyl, β-hydroxyethyl, β-hydroxypropyl, CH₂CO₂⁻, CH(CO₂⁻)CH₂CO₂⁻ or CH₂CH₂SO₃⁻ and
p is 1 or 2.

5. Aqueous coating compositions according to claim 1, wherein in compounds of formula (I) the anionic charge on the brightener is balanced by a cationic charge composed of one or more identical or different cations selected from the group consisting of Na⁺, K⁺, triethanolammonium, N-hydroxyethyl-N,N-dimethylammonium, N-hydroxyethyl-N,N-diethylammonium or mixtures of said compounds,
R₁ and R₁' may be the same or different, and each is hydrogen, methyl, ethyl, propyl, β-hydroxyethyl, β-hydroxypropyl, CH₂CO₂⁻, CH₂CH₂CONH₂ or CH₂CH₂CN,
R₂ and R₂' may be the same or different, and each is ethyl, propyl, β-hydroxyethyl, β-hydroxypropyl, CH₂CO₂⁻, CH(CO₂⁻)CH₂CO₂⁻ or CH₂CH₂SO₃⁻ and
p is 1.

6. Aqueous coating compositions according to at least one of the preceding claims, wherein the compound of formula (I) is used in an amount of from 0.01 to 5 % by weight, % by weight being based on the total weight of dry white pigment.

7. Aqueous coating compositions according to at least one of the preceding claims, wherein in compounds of formula (II)
R₃ signifies H, methyl or ethyl,
R₄ signifies paramethoxyphenyl, methyl or ethyl,
M signifies a cation selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

8. Aqueous coating compositions according to at least one of the preceding claims, wherein in compounds of formula (II)
R₃ signifies methyl or ethyl,
R₄ signifies methyl or ethyl,
M signifies a cation selected from the group consisting of Li⁺, Na⁺, K⁺, ½ Ca²⁺, ½ Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

9. Aqueous coating compositions according to at least one of the preceding claims, wherein in compounds of formula (II)
R₃ signifies methyl or ethyl,
R₄ signifies methyl or ethyl,
M signifies a cation selected from the group consisting of Na⁺, K⁺, triethanolammonium, N-hydroxyethyl-N,N-dimethylammonium, N-hydroxyethyl-N,N-diethylammonium or mixtures of said compounds.

10. Aqueous coating compositions according to at least one of the preceding claims, wherein the compound of formula (II) is used in an amount from 0.00001 to 0.05 % by weight, the % by weight being based on the total weight of dry white pigment.

11. Aqueous coating compositions according to at least one of the preceding claims, wherein the coating compositions comprises from 10 to 70 % by weight of white pigments, the % by weight being based on the total weight of the coating composition.

12. Aqueous coating compositions according to claim 11, wherein the white pigments are inorganic pigments.

13. Aqueous coating compositions according to at least one of the preceding claims, wherein the binder consists of a single binder or of a mixture of primary and secondary binders.

14. Aqueous coating compositions according to claim 13, wherein the single or primary binder is used in an amount in the range of form 2 to 25 % by weight, the % by weight being based on the total weight of white pigment.

15. Aqueous coating compositions according to claims 13 and/or 14, wherein polyvinyl alcohol is used as secondary binder, which has a degree of hydrolysis greater than or equal to 60 % and a Brookfield viscosity of from 2 to 80 mPa.s (4 % aqueous solution at 20 °C).

16. Aqueous coating compositions according to at least one of the claims 13 to 15, wherein the secondary binder is used in an amount in the range of from 0.1 to 20 % by weight, the % by weight being based on the total weight of white pigment.

17. Aqueous coating compositions according to at least one of the preceding claims, wherein the pH value of the coating composition is in the range of from 5 to 13.

18. Use of an aqueous coating composition according to at least one of the preceding claims for optical brightening and tinting of paper substrates.

19. Use of an aqueous coating composition according to claim 18, wherein it is used as a preformed aqueous solution, and the concentration of compound of formula (I) in water is preferably from 1 to 80 % by weight, the % by weight being based on the total weight of the preformed aqueous solution containing the compound of formula (I).

20. Use of an aqueous coating composition according to claim 18 and/or 19, wherein in the preformed aqueous solution, the concentration of compound of formula (II) in water is preferably of from 0.001 to 30 % by weight, the % by weight being based on the total weight of the preformed aqueous solution containing the compound of formula (II).

21. Use of an aqueous coating composition according to one or more of the preceding claims 18 to 20, wherein in the preformed aqueous solution, the concentration of secondary binders in water is from 1 to 50 % by weight, the % by weight being based on the total weight of the preformed aqueous solution containing the secondary binders.

## Patentansprüche

1. Wässrige Beschichtungszusammensetzungen zum optischen Aufhellen und Abtönen von Substraten, aufweisend
(a) mindestens einen optischen Aufheller der Formel (I) 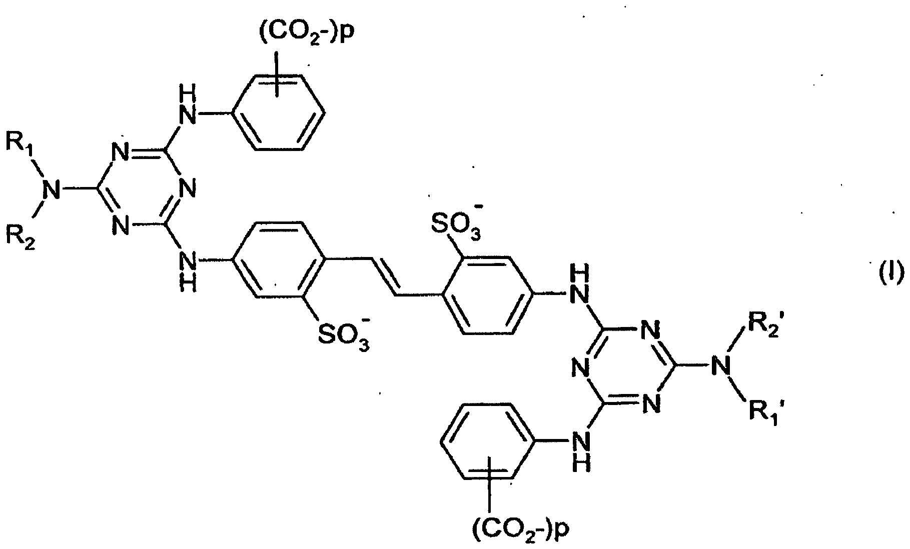 in welcher
die anionische Ladung auf dem Aufheller ausgeglichen wird durch kationische Ladung, zusammengesetzt aus einem oder mehreren identischen oder verschiedenen Kationen, ausgewählt aus der Gruppe bestehend aus Wasserstoff, Alkalimetallkation, Erdalkalimetall, Ammonium, Ammonium, das mono-, di-, tri- oder tetrasubstituiert ist durch C₁-C₄ linearen oder verzweigtkettigen Alkylrest, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen,
R₁ und R₁' können gleich oder verschieden sein, und sind jeweils Wasserstoff, C₁-C₄ lineares oder verzweigtkettiges Alkyl, C₂-C₄ lineares oder verzweigtkettiges Hydroxyalkyl, CH₂CO₂⁻, CH₂CH₂CONH₂ oder CH₂CH₂CN,
R₂ und R₂' können gleich oder verschieden sein, und sind jeweils C₁-C₄ lineares oder verzweigtkettiges Alkyl, C₂-C₄ lineares oder verzweigtkettiges Hydroxyalkyl, CH₂CO₂⁻, CH(CO₂⁻)CH₂CO₂⁻, CH(CO₂⁻)CH₂CH₂CO₂⁻, CH₂CH₂SO₃⁻, CH₂CH₂CO₂⁻, CH₂CH(CH₃)CO₂⁻, Benzyl, oder
R₁ und R₂ und/oder R₁' und R₂' zusammen mit dem benachbarten Stickstoffatom bedeuten einen Morpholinring, und
p ist 1 oder 2,
(b) mindestens einen Abtönungsfarbstoff der Formel (II) 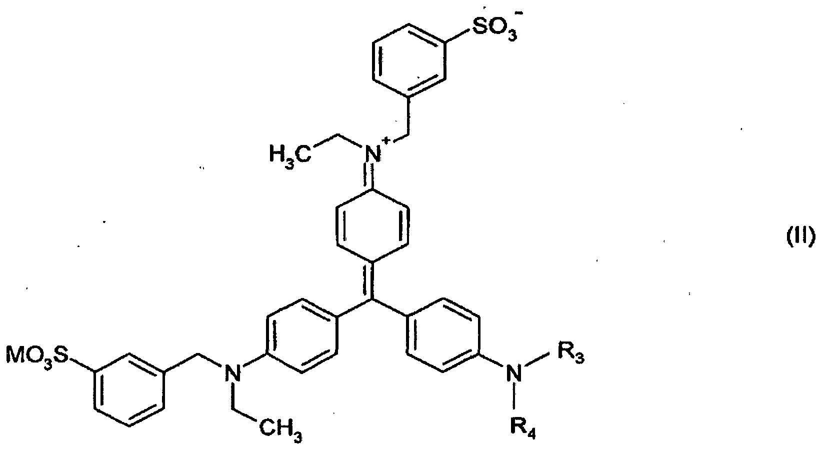 in welcher
R₃ bedeutet H, Methyl oder Ethyl,
R₄ bedeutet Paramethoxyphenyl, Methyl oder Ethyl,
M bedeutet Kation, ausgewählt aus der Gruppe bestehend aus Wasserstoff, Alkalimetallkation, Erdalkalimetall, Ammonium, Ammonium, das mono-, di-, tri- oder tetrasubstituiert ist durch C₁-C₄ linearen oder verzweigtkettigen Alkylrest, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen,
(c) mindestens ein weißes Pigment,
(d) mindestens einen primären Binder,
(e) optional einen oder mehrere sekundäre Binder und
(f) Wasser.

2. Wässrige Beschichtungszusammensetzungen gemäß Anspruch 1, wobei in Verbindungen der Formel (I), in welcher p 1 ist, die CO₂-Gruppe an der 2- oder 4-Position des Phenylrings steht.

3. Wässrige Beschichtungszusammensetzungen gemäß Anspruch 1, wobei in Verbindungen der Formel (I) die anionische Ladung auf dem Aufheller ausgeglichen wird durch kationische Ladung, zusammengesetzt aus einem oder mehreren identischen oder verschiedenen Kationen, ausgewählt aus der Gruppe bestehend aus Wasserstoff, Alkalimetallkation, Erdalkalimetall, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen,
R₁ und R₁' können gleich oder verschieden sein, und sind jeweils Wasserstoff, C₁-C₄ lineares oder verzweigtkettiges Alkyl, C₂-C₄ lineares oder verzweigtkettiges Hydroxyalkyl, CH₂CO₂⁻, CH₂CH₂CONH₂ oder CH₂CH₂CN,
R₂ und R₂' können gleich oder verschieden sein, und sind jeweils C₁-C₄ lineares oder verzweigtkettiges Alkyl, C₂-C₄ lineares oder verzweigtkettiges Hydroxyalkyl, CH₂CO₂⁻, CH(CO₂⁻)CH₂CO₂⁻ oder CH₂CH₂SO₃⁻, und
p ist 1 oder 2.

4. Wässrige Beschichtungszusammensetzungen gemäß Anspruch 1, wobei in Verbindungen der Formel (I) die anionische Ladung auf dem Aufheller ausgeglichen wird durch kationische Ladung, zusammengesetzt aus einem oder mehreren identischen oder verschiedenen Kationen, ausgewählt aus der Gruppe bestehend aus Li⁺, Na⁺, K⁺, Ca²⁺, Mg²⁺, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen,
R₁ und R₁' können gleich oder verschieden sein, und sind jeweils Wasserstoff, Methyl, Ethyl, Propyl, α-Methylpropyl, β-Methylpropyl, β-Hydroxyethyl, β-Hydroxypropyl, CH₂CO₂⁻, CH₂CH₂CONH₂ oder CH₂CH₂CN,
R₂ und R₂' können gleich oder verschieden sein, und sind jeweils Methyl, Ethyl, Propyl, α-Methylpropyl, β-Methylpropyl, β-Hydroxyethyl, β-Hydroxypropyl, CH₂CO₂⁻, CH(CO₂⁻)CH₂CO₂⁻ oder CH₂CH₂SO₃⁻, und
p ist 1 oder 2.

5. Wässrige Beschichtungszusammensetzungen gemäß Anspruch 1, wobei in Verbindungen der Formel (I) die anionische Ladung auf dem Aufheller ausgeglichen wird durch kationische Ladung, zusammengesetzt aus einem oder mehreren identischen oder verschiedenen Kationen, ausgewählt aus der Gruppe bestehend aus Na⁺, K⁺, Triethanolammonium, N-Hydroxyethyl-N,N-dimethylammonium, N-Hydroxyethyl-N,N-diethylammonium oder Gemischen besagter Verbindungen,
R₁ und R₁' können gleich oder verschieden sein, und sind jeweils Wasserstoff, Methyl, Ethyl, Propyl, β-Hydroxyethyl, β-Hydroxypropyl, CH₂CO₂⁻, CH₂CH₂CONH₂ oder CH₂CH₂CN,
R₂ und R₂' können gleich oder verschieden sein, und sind jeweils Ethyl, Propyl, β-Hydroxyethyl, β-Hydroxypropyl, CH₂CO₂⁻, CH(CO₂⁻)CH₂CO₂⁻ oder CH₂CH₂SO₃⁻, und
p ist 1.

6. Wässrige Beschichtungszusammensetzungen gemäß mindestens einem der vorangehenden Ansprüche, wobei die Verbindung der Formel (I) in einer Menge von 0,01 bis 5 Gewichts-% verwendet wird, wobei das Gewichts-% auf dem Gesamtgewicht an trockenem weißem Pigment beruht.

7. Wässrige Beschichtungszusammensetzungen gemäß mindestens einem der vorangehenden Ansprüche, wobei in Verbindungen der Formel (II)
R₃ bedeutet H, Methyl oder Ethyl,
R₄ bedeutet Paramethoxyphenyl, Methyl oder Ethyl,
M bedeutet Kation, ausgewählt aus der Gruppe bestehend aus Wasserstoff, Alkalimetallkation, Erdalkalimetall, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen.

8. Wässrige Beschichtungszusammensetzungen gemäß mindestens einem der vorangehenden Ansprüche, wobei in Verbindungen der Formel (II)
R₃ bedeutet Methyl oder Ethyl,
R₄ bedeutet Methyl oder Ethyl,
M bedeutet Kation, ausgewählt aus der Gruppe bestehend aus Li⁺, Na⁺, K⁺, ½ Ca²⁺, ½ Mg²⁺, Ammonium, das mono-, di-, tri- oder tetrasubstituiert ist durch C₁-C₄ linearen oder verzweigtkettigen Hydroxyalkylrest, Ammonium, das di-, tri- oder tetrasubstituiert ist durch ein Gemisch aus C₁-C₄ linearen oder verzweigtkettigen Alkylrest und linearen oder verzweigtkettigen Hydroxyalkylrest oder Gemischen besagter Verbindungen.

9. Wässrige Beschichtungszusammensetzungen gemäß mindestens einem der vorangehenden Ansprüche, wobei in Verbindungen der Formel (II)
R₃ bedeutet Methyl oder Ethyl,
R₄ bedeutet Methyl oder Ethyl,
M bedeutet Kation, ausgewählt aus der Gruppe bestehend aus Na⁺, K⁺, Triethanolammonium, N-Hydroxyethyl-N,N-dimethylammonium, N-Hydroxyethyl-N,N-diethylammonium oder Gemischen besagter Verbindungen.

10. Wässrige Beschichtungszusammensetzungen gemäß mindestens einem der vorangehenden Ansprüche, wobei die Verbindung der Formel (II) in einer Menge von 0,00001 bis 0,05 Gewichts-% verwendet wird, wobei das Gewichts-% auf dem Gesamtgewicht an trockenem weißen Pigment beruht.

11. Wässrige Beschichtungszusammensetzungen gemäß mindestens einem der vorangehenden Ansprüche, wobei die Beschichtungszusammensetzung von 10 und 70 Gewichts-% an weißen Pigmenten aufweist, wobei das Gewichts-% auf dem Gesamtgewicht der Beschichtungszusammensetzung beruht.

12. Wässrige Beschichtungszusammensetzungen gemäß Anspruch 11, wobei die weißen Pigmente anorganische Pigmente sind.

13. Wässrige Beschichtungszusammensetzungen gemäß mindestens einem der vorangehenden Ansprüche, wobei der Binder aus einzelnem Binder oder aus einem Gemisch aus primären und sekundären Bindern besteht.

14. Wässrige Beschichtungszusammensetzungen gemäß Anspruch 13, wobei der einzelne oder primäre Binder in einer Menge im Bereich von 2 bis 25 Gewichts-% verwendet wird, wobei das Gewichts-% auf dem Gesamtgewicht an weißem Pigment beruht.

15. Wässrige Beschichtungszusammensetzungen gemäß Ansprüchen 13 und/oder 14, wobei Polyvinylalkohol als sekundärer Binder verwendet wird, der einen Hydrolysegrad größer oder gleich 60% und eine Brookfield Viskosität von 2 bis 80 mPa.s (4% wässrige Lösung bei 20°C) hat.

16. Wässrige Beschichtungszusammensetzungen gemäß mindestens einem der Ansprüche 13 bis 15, wobei der sekundäre Binder in einer Menge im Bereich von 0,1 bis 20 Gewichts-% verwendet wird, wobei das Gewichts-% auf dem Gesamtgewicht an weißem Pigment beruht.

17. Wässrige Beschichtungszusammensetzungen gemäß mindestens einem der vorangehenden Ansprüche, wobei der pH-Wert der Beschichtungszusammensetzung im Bereich von 5 bis 13 ist.

18. Verwendung einer wässrigen Beschichtungszusammensetzung gemäß mindestens einem der vorangehenden Ansprüche zum optischen Aufhellen und Tönen von Papiersubstraten.

19. Verwendung einer wässrigen Beschichtungszusammensetzung gemäß Anspruch 18, wobei diese als vorgebildete wässrige Lösung verwendet wird, und die Konzentration von Verbindung der Formel (I) in Wasser vorzugsweise von 1 bis 80 Gewichts-% ist, wobei das Gewichts-% auf dem Gesamtgewicht der vorgebildeten wässrigen Lösung beruht, die die Verbindung der Formel (I) enthält.

20. Verwendung einer wässrigen Beschichtungszusammensetzung gemäß Anspruch 18 und/oder 19, wobei in der vorgebildeten wässrigen Lösung die Konzentration von Verbindung von Formel (II) in Wasser vorzugsweise von 0,001 bis 30 Gewichts-% ist, wobei das Gewichts-% auf dem Gesamtgewicht der vorgebildeten wässrigen Lösung beruht, die die Verbindung der Formel (II) enthält.

21. Verwendung einer wässrigen Beschichtungszusammensetzung gemäß einem oder mehreren der vorangehenden Ansprüche 18 bis 20, wobei in der vorgebildeten wässrigen Lösung die Konzentration an sekundären Bindern in Wasser von 1 und 50 Gewichts-% ist, wobei das Gewichts-% auf dem Gesamtgewicht der vorgebildeten wässrigen Lösung beruht, die die sekundären Binder enthält.

## Revendications

1. Compositions de revêtement aqueuses pour l'azurage optique et le nuançage de substrats, comprenant
(a) au moins un azurant optique de formule (I) 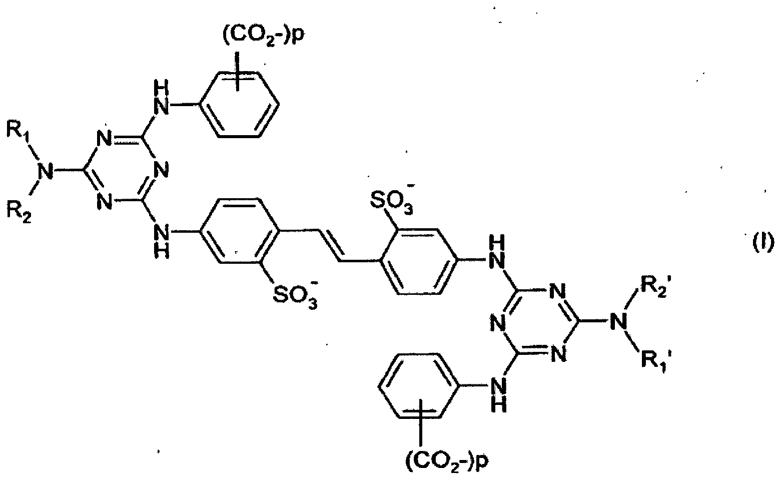 où
la charge anionique de l'azurant est compensée par une charge cationique composée d'un ou plusieurs cations identiques ou différents choisis dans le groupe consistant en l'hydrogène, un cation de métal alcalin, un métal alcalino-terreux, ammonium, ammonium qui est mono-, di-, tri- ou tétrasubstitué par un radical C₁-C₄ alkyle linéaire ou ramifié, ammonium qui est mono-, di-, tri- ou tétrasubstitué par un radical C₁-C₄ hydroxyalkyle linéaire ou ramifié, ammonium qui est di-, tri-, ou tétrasubstitué par un mélange de radical C₁-C₄ alkyle linéaire ou ramifié et de radical hydroxy-alkyle linéaire ou ramifié ou des mélanges desdits composés,
R₁ et R₁' peuvent être identiques ou différents, et sont chacun l'hydrogène, C₁-C₄ alkyle linéaire ou ramifié, C₂-C₄ hydroxyalkyle linéaire ou ramifié, CH₂CO₂⁻, CH₂CH₂CONH₂ ou CH₂CH₂CN,
R₂ et R₂' peuvent être identiques ou différents et sont chacun C₁-C₄ alkyle linéaire ou ramifié, C₂-C₄ hydroxyalkyle linéaire ou ramifié, CH₂CO₂⁻, CH(CO₂⁻)CH₂CO₂⁻, CH(CO₂⁻)CH₂CH₂CO₂⁻, CH₂CH₂SO₃⁻, CH₂CH₂CO₂⁻, CH₂CH(CH₃)CO₂⁻, benzyle, ou
R₁ et R₂ et/ou R₁' et R₂', avec l'atome d'azote voisin signifient un cycle morpholine et
p est 1 ou 2,
(b) au moins un colorant de nuançage de formule (II) 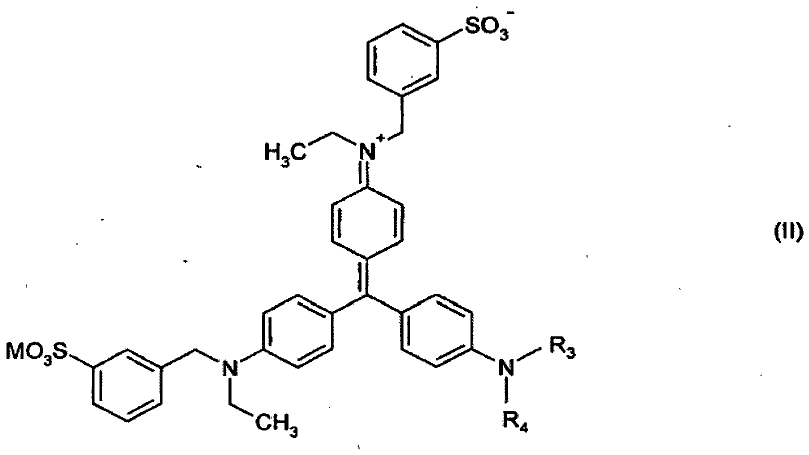 où
R₃ signifie H, méthyle ou éthyle,
R₄ signifie paraméthoxyphényle, méthyle ou éthyle,
M signifie un cation choisi dans le groupe consistant en l'hydrogène, un cation de métal alcalin, un métal alcalino-terreux, ammonium, ammonium qui est mono-, di-, tri- ou tétrasubstitué par un radical C₁-C₄ alkyle linéaire ou ramifié, ammonium qui est mono-, di-, tri- ou tétrasubstitué par un radical C₁-C₄ hydroxyalkyle linéaire ou ramifié, ammonium qui est di-, tri- ou tétrasubstitué par un mélange de radical C₁-C₄ alkyle linéaire ou ramifié et de radical hydroxyalkyle linéaire ou ramifié ou des mélanges desdits composés,
(c) au moins un pigment blanc,
(d) au moins un liant primaire,
(e) éventuellement un ou plusieurs liants secondaires et
(f) de l'eau.

2. Compositions de revêtement aqueuses selon la revendication 1, où dans les composés de formule (I) pour lesquels p est 1, le groupe CO₂⁻ est dans la position 2 ou 4 du cycle phényle.

3. Compositions de revêtement aqueuses selon la revendication 1, où dans les composés de formule (I) la charge anionique sur l'azurant est compensée par une charge cationique composée d'un ou plusieurs cations identiques ou différents choisis dans le groupe consistant en l'hydrogène, un cation de métal alcalin, un métal alcalino-terreux, ammonium qui est mono-, di-, tri- ou tétrasubstitué par un radical C₁-C₄ hydroxyalkyle linéaire ou ramifié, ammonium qui est di-, tri- ou tétrasubstitué par un mélange de radical C₁-C₄ alkyle linéaire ou ramifié et de radical hydroxyalkyle linéaire ou ramifié ou des mélanges desdits composés,
R₁ et R₁' peuvent être identiques ou différents, et sont chacun l'hydrogène, C₁-C₄ alkyle linéaire ou ramifié, C₂-C₄ hydroxyalkyle linéaire ou ramifié, CH₂CO₂⁻, CH₂CH₂CONH₂ ou CH₂CH₂CN,
R₂ et R₂' peuvent être identiques ou différents, et sont chacun C₁-C₄ alkyle linéaire ou ramifié, C₂-C₄ hydroxyalkyle linéaire ou ramifié, CH₂CO₂⁻, CH(CO₂⁻)CH₂CO₂⁻ ou CH₂CH₂SO₃⁻ et
p est 1 ou 2.

4. Compositions de revêtement aqueuses selon la revendication 1, où dans les composés de formule (I) la charge anionique sur l'azurant est compensée par une charge cationique composée d'un ou plusieurs cations identiques ou différents choisis dans le groupe consistant en Li⁺, Na⁺, K⁺, Ca²⁺, Mg²⁺, ammonium qui est mono-, di-, tri- ou tétrasubstitué par un radical C₁-C₄ hydroxyalkyle linéaire ou ramifié, ammonium qui est di-, tri- ou tétrasubstitué par un mélange de radical C₁-C₄ alkyle linéaire ou ramifié et de radical hydroxyalkyle linéaire ou ramifié ou des mélanges desdits composés,
R₁ et R₁' peuvent être identiques ou différents et sont chacun l'hydrogène, méthyle, éthyle, propyle, α-méthylpropyle, β-méthylpropyle, β-hydroxyéthyle, β-hydroxypropyle, CH₂CO₂⁻, CH₂CH₂CONH₂ ou CH₂CH₂CN,
R₂ et R₂' peuvent être identiques ou différents et sont chacun méthyle, éthyle, propyle, α-méthylpropyle, β-méthylpropyle, β-hydroxyéthyle, β-hydroxypropyle, CH₂CO₂⁻, CH(CO₂⁻)CH₂CO₂⁻ ou CH₂CH₂SO₃⁻ et
p est 1 ou 2.

5. Compositions de revêtement aqueuses selon la revendication 1, où dans les composés de formule (I) la charge anionique sur l'azurant est compensée par une charge cationique composée d'un ou plusieurs cations identiques ou différents choisis dans le groupe consistant en Na⁺, K⁺, triéthanolammonium, N-hydroxyéthyl-N,N-diméthylammonium, N-hydroxyéthyl-N,N-diéthylammonium ou des mélanges desdits composés,
R₁ et R₁' peuvent être identiques ou différents et sont chacun l'hydrogène, méthyle, éthyle, propyle, β-hydroxyéthyle, β-hydroxypropyle, CH₂CO₂⁻, CH₂CH₂CONH₂ ou CH₂CH₂CN,
R₂ et R₂' peuvent être identiques ou différents et sont chacun éthyle, propyle, β-hydroxyéthyle, β-hydroxypropyle, CH₂CO₂⁻, CH(CO₂⁻)CH₂CO₂⁻ ou CH₂CH₂SO₃⁻ et
p est 1.

6. Compositions de revêtement aqueuses selon au moins l'une des revendications précédentes, où le composé de formule (I) est utilisé en une quantité de 0,01 à 5 % en poids, % en poids étant basé sur le poids total de pigment blanc sec.

7. Compositions de revêtement aqueuses selon au moins l'une des revendications précédentes, où dans les composés de formule (II)
R₃ signifie H, méthyle ou éthyle,
R₄ signifie paraméthoxyphényle, méthyle ou éthyle,
M signifie un cation choisi dans le groupe consistant en l'hydrogène, un cation de métal alcalin, un métal alcalino-terreux, ammonium qui est mono-, di-, tri- ou tétrasubstitué par un radical C₁-C₄ hydroxyalkyle linéaire ou ramifié, ammonium qui est di-, tri- ou tétrasubstitué par un mélange de radical C₁-C₄ alkyle linéaire ou ramifié et de radical hydroxyalkyle linéaire ou ramifié ou des mélanges desdits composés.

8. Compositions de revêtement aqueuses selon au moins l'une des revendications précédentes, où dans les composés de formule (II)
R₃ signifie méthyle ou éthyle,
R₄ signifie méthyle ou éthyle,
M signifie un cation choisi dans le groupe consistant en Li⁺, Na⁺, K⁺, ½ Ca²⁺ ½ Mg²⁺, ammonium qui est mono-, di-, tri- ou tétrasubstitué par un radical C₁-C₄ hydroxyalkyle linéaire ou ramifié, ammonium qui est di-, tri- ou tétrasubstitué par un mélange de radical C₁-C₄ alkyle linéaire ou ramifié et de radical hydroxyalkyle linéaire ou ramifié ou des mélanges desdits composés.

9. Compositions de revêtement aqueuses selon au moins l'une des revendications précédentes, où dans les composés de formule (II)
R₃ signifie méthyle ou éthyle,
R₄ signifie méthyle ou éthyle,
M signifie un cation choisi dans le groupe consistant en Na⁺, K⁺, triéthanolammonium, N-hydroxyéthyl-N,N-diméthylammonium, N-hydroxyéthyl-N,N-diéthylammonium ou des mélanges desdits composés.

10. Compositions de revêtement aqueuses selon au moins l'une des revendications précédentes, où le composé de formule (II) est utilisé en une quantité de 0,00001 à 0,05 % en poids, le % en poids étant basé sur le poids total de pigment blanc sec.

11. Compositions de revêtement aqueuses selon au moins l'une des revendications précédentes, où les compositions de revêtement comprennent de 10 à 70 % en poids de pigments blancs, le % en poids étant basé sur le poids total de la composition de revêtement.

12. Compositions de revêtement aqueuses selon la revendication 11, où les pigments blancs sont des pigments inorganiques.

13. Compositions de revêtement aqueuses selon au moins l'une des revendications précédentes, où le liant consiste en un liant unique ou en un mélange de liants primaires et secondaires.

14. Compositions de revêtement aqueuses selon la revendication 13, où le liant unique ou primaire est utilisé en une quantité dans la plage de 2 à 25 % en poids, le % en poids étant basé sur le poids total de pigment blanc.

15. Compositions de revêtement aqueuses selon les revendications 13 et/ou 14, où du poly(alcool vinylique) est utilisé comme liant secondaire, qui a un degré d'hydrolyse supérieur ou égal à 60 % et une viscosité Brookfield de 2 à 80 mPa.s (solution aqueuse à 4 % à 20°C).

16. Compositions de revêtement aqueuses selon au moins l'une des revendications 13 à 15, où le liant secondaire est utilisé en une quantité dans la plage de 0,1 à 20 % en poids, le % en poids étant basé sur le poids total de pigment blanc.

17. Compositions de revêtement aqueuses selon au moins l'une des revendications précédentes, où le pH de la composition de revêtement est dans la plage de 5 à 13.

18. Utilisation d'une composition de revêtement aqueuse selon au moins l'une des revendications précédentes pour l'azurage optique et le nuançage de substrats en papier.

19. Utilisation d'une composition de revêtement aqueuse selon la revendication 18, où elle est utilisée sous forme d'une solution aqueuse préformée, et la concentration de composé de formule (I) dans l'eau est de préférence de 1 à 80 % en poids, le % en poids étant basé sur le poids total de la solution aqueuse préformée contenant le composé de formule (I).

20. Utilisation d'une composition de revêtement aqueuse selon la revendication 18 et/ou 19 où dans la solution aqueuse préformée, la concentration de composé de formule (II) dans l'eau est de préférence de 0,001 à 30 % en poids, le % en poids étant basé sur le poids total de la solution aqueuse préformée contenant le composé de formule (II).

21. Utilisation d'une composition de revêtement aqueuse selon une ou plusieurs des revendications 18 à 20 précédentes, où dans la solution aqueuse préformée, la concentration de liants secondaires dans l'eau est de 1 à 50 % en poids, le % en poids étant basé sur le poids total de la solution aqueuse préformée contenant les liants secondaires.
